# EUROPÄISCHE PATENTSCHRIFT

(11) **EP 3 104 735 B1**
(45) Veröffentlichungstag und Bekanntmachung des Hinweises auf die Patenterteilung: **03.01.2018**
(21) Anmeldenummer: 15703294.7
(22) Anmeldetag: 10.02.2015
(51) Int. Cl.: A44B 11/25, F16B 5/06

(54) **VERBINDUNGSELEMENT ZUR FIXIERUNG ZWEIER HALBSCHALEN EINER SCHLOSSKAPPE VON EINEM GURTSCHLOSS**
CONNECTING ELEMENT FOR SECURING TWO HALF SHELLS OF A BUCKLE CAP OF A BELT BUCKLE
ÉLÉMENT DE LIAISON POUR LA FIXATION DE DEUX DEMI-COQUES D'UN BOÎTIER DE BOUCLE DE CEINTURE DE SÉCURITÉ

(30) Priorität: 13.02.2014 DE 102014202618
(43) Veröffentlichungstag der Anmeldung: 21.12.2016
(73) Patentinhaber: Autoliv Development AB, 447 83 Vårgårda (SE)
(72) Erfinder: PLACZEK, Melanie, 25355 Barmstedt (DE); LEGDE, Dietmar, 22457 Hamburg (DE); HERMANN, Michel, 25421 Pinneberg (DE)
(74) Vertreter: Müller Verweyen
(86) Internationale Anmeldenummer: PCT/EP2015/052718
(87) Internationale Veröffentlichungsnummer: WO 2015/121234

(56) Entgegenhaltungen:
- DE-A1-102008 030 048
- DE-A1-102012 200 242
- US-A- 3 883 258

## Beschreibung

Die Erfindung betrifft ein Verbindungselement zur Fixierung zweier Halbschalen von einer einem Gurtschloss eines Sicherheitsgurtsystems zugeordneten Schlosskappe nach dem Oberbegriff des Anspruchs 1 sowie ein Verfahren zum Verbinden von zwei Halbschalen nach Anspruch 13.

Gurtschlösser für das Sicherheitsgurtsystem in Kraftfahrzeugen umfassen üblicherweise eine zwei zusammengefügte Halbschalen umfassende Schlosskappe, die einen metallischen Träger, eine Auslösetaste sowie eine Mechanik einschließt. Ein derartiges Gurtschloss ist beispielsweise aus der EP 0 305 444 B1 bekannt. Die Halbschalen eines Gurtschlosses können durch unterschiedliche Methoden zusammengefügt werden. Beispielsweise ist es bekannt, die Halbschalen miteinander zu verschrauben. Eine weitere Möglichkeit besteht darin, die Halbschalen durch ein Schweißverfahren stoffschlüssig zu verbinden. Schließlich können die Halbschalen durch formschlüssige und/oder kraftschlüssige Schnappverbindungen verbunden werden.

Aus der DE 10 2012 200 242 A1 ist ein gattungsgemäßes Verbindungselement bekannt, das mit einem Verankerungsabschnitt in Verbindung mit einem endseitigen Halteteller in einer Halbschale lagefixiert ist. Ein Befestigungsabschnitt des Verbindungselements ist im Einbauzustand kraftschlüssig in eine als Bohrung ausgebildete Ausnehmung der zugehörigen weiteren Halbschale des Gurtschlosses eingesetzt. Dazu umfasst der Befestigungsabschnitt ein begrenzt elastisches rampenartiges Profil, dessen Durchmesser den Durchmesser der Bohrung übertrifft.

Gemäß der DE 10 2008 030 048 A1 sind zur gegenseitigen Befestigung der Halbschalen mehrere Verbindungsstifte mit außenprofilierten Endabschnitten vorgesehen, die im Endzustand jeweils in Bohrungen der Halbschalen eingreifen. Der Außendurchmesser der profilierten Endabschnitte im nicht montierten Zustand übertrifft dabei den Durchmesser der Bohrungen. Zur Montage werden die Endabschnitte in die Bohrungen eingepresst, wo sie aufgrund der überdeckenden Profilierung kraftschlüssig gehalten sind. Die Montage erfordert gleichzeitig eine parallele Einführung der jeweiligen Endabschnitte der Verbindungsstifte in die Halbschalen.

Aus der DE 10 2006 049 335 A1 ist eine Befestigungsanordnung bekannt, bei der ein Bolzen mit einem ein Außengewinde einschließenden Verankerungsabschnitt stoffschlüssig in einer Bohrung eines ersten Bauteils fixiert ist. Dem Verankerungsabschnitt abgewandt schließt die Befestigungsanordnung einen Befestigungsabschnitt mit mehreren axial zueinander ausgerichteten und Hinterschneidungen bildende Kegelstümpfen ein. Im Einbauzustand ist der Befestigungsabschnitt in zumindest einem zweiten Bauteil form- und kraftschlüssig gehalten.

Die Aufgabe der vorliegenden Erfindung besteht darin, ein kostengünstig herstellbares Verbindungselement anzubieten, mit dem zwei Halbschalen der Schlosskappe eines Gurtschlosses, mit welchem eine einfache und kostengünstige Montage möglich ist, mit dem die Halbschalen der Schlosskappe sicher und dauerfest zusammengefügt werden können.

Die Aufgabe wird durch ein Verbindungselement mit den Merkmalen des Anspruchs 1 sowie durch ein Verfahren nach Anspruch 13 gelöst. Bevorzugte Weiterbildungen der Erfindung gemäß Anspruch 1 sind in den abhängigen Ansprüchen 2 bis 12 angegeben.

Das erfindungsgemäße Verbindungselement ist nach Anspruch 1 mit dem Verankerungsabschnitt stoffschlüssig oder kraftschlüssig in eine erste Halbschale und mit dem Befestigungsabschnitt kraft- und/oder formschlüssig in eine zweite Halbschale von der Schlosskappe eines Gurtschlosses eingesetzt. Der Befestigungsabschnitt weist ferner zu einem freien Ende einen sich konisch verjüngenden Kernzapfen auf, der außenseitig eine symmetrisch oder asymmetrisch ausgeführte Struktur aus einzelnen Rippen aufweist.

Der Grundgedanke der Erfindung besteht darin, ein kostengünstig herstellbares Verbindungselement zu schaffen, mit dem eine dauerfeste Verbindung zwischen zwei Halbschalen von einer Schlosskappe eines Gurtschlosses erreichbar ist. Das Verbindungselement ermöglicht vorteilhaft mit geringem apparativen Aufwand eine einfache und sichere Montage, wobei die Verbindungselemente bei einem fertig gestellten Bauteil vorteilhaft in die Halbschalen integriert sind. Durch die erfindungsgemäßen Verbindungselemente sind die Halbschalen so zusammengefügt, dass ein Lösen bzw. Trennen der Halbschalen nur mit hohem Kraftaufwand und/oder nicht zerstörungsfrei möglich ist.

Der Aufbau des erfindungsgemäßen Verbindungselements unterscheidet sich von den bisher bekannten Lösungen, bei denen das Verbindungselement oder der Verbindungsstift über die gesamte Länge übereinstimmend gestaltete, außenprofilierte Endabschnitte bzw. Rippen aufweist. Dadurch ergibt sich eine konsistente Steifigkeit aller Abschnitte oder Rippen, damit verbunden erhöht sich synchron zur Einpresstiefe eine Einpresskraft der Verbindungsstifte.

Abweichend dazu stellt sich durch das erfindungsgemäße Konzept vorteilhaft bis zum Erreichen einer Endlage der zusammengefügten Bauteile eine nahezu konstante Einpresskraft der Verbindungsstifte ein. Außerdem kann mit dem erfindungsgemäßen Konzept eine erhöhte Haltekraft realisiert werden.

Die elastischen Abschnitte am Ende des erfindungsgemäßen konischen Kernzapfens ermöglichen einerseits ein vereinfachtes Einführen und Zentrieren des Verbindungselements in die zugeordnete Bohrung oder Öffnung des zugehörigen weiteren Bauteils. Andererseits bewirken die in Richtung des Trennabschnitts kontinuierlich steiferen Abschnitte oder Rippen einen erhöhten sicheren und dauerfesten Sitz bzw. Halt des Befestigungsabschnitts in der Halbschalenbohrung.

Die Erfindung ermöglicht vorteilhaft, eine Taktzeit der vorzugsweise automatisierten Montage des Gurtschlosses zu reduzieren, da bereits vor einem Zusammenfügen beider Halbschalen die Verbindungselemente mit einem Verankerungsabschnitt in einer ersten Halbschale dauerfest fixiert sind. Der weitere automatisierte Fügeprozess der Halbschalen beschränkt sich auf das Einführen des Befestigungsabschnitts in die sacklochartig ausgebildete Ausnehmung der zugehörigen zweiten Halbschale, bevor beide Habschalen zusammengefügt werden. Dadurch stellt sich neben einer optimierten Prozesssicherheit zusätzlich ein Kostenvorteil ein.

Ein weiterer Vorteil besteht darin, dass das erfindungsgemäße Verbindungselement auf bestehende Schlosskappen und folglich Gurtschlösserkonzepte übertragbar ist, da diese in den vorhandenen Bauraum integrierbar sind und keine Änderung der äußeren Konfiguration der Halbschalen erfordern. Bevorzugt sind die erfindungsgemäßen Verbindungselemente zur Erzielung einer übereinstimmenden Kräfteverteilung parallel zueinander und symmetrisch zu einer Symmetrieachse des Gurtschlosses in den zugehörigen Halbschalen eingesetzt.

Durch die Erfindung wird weiterhin ein standardisiertes Verbindungselement geschaffen, das beispielsweise für weitere Elemente des Sicherheitsgurtsystems einsetzbar ist, da dieses Verbindungselement vorteilhaft in dem vorhandenen Bauraum ohne zusätzliche Maßnahmen einsetzbar ist. Außerdem bietet es sich an, das Verbindungselement allgemein für Anwendungen vorzusehen, bei denen zwei insbesondere aus Kunststoff hergestellte Schalenelemente zusammengefügt werden.

Gemäß einer bevorzugten Weiterbildung der Erfindung wird vorgeschlagen, dass die Rippen durch rampenförmige, bevorzugt elastische, Abschnitte gebildet sind, wobei der Außendurchmesser der Rippen übereinstimmen oder sich auch kontinuierlich verändern kann.

Ferner können sich die Rippen jeweils in Richtung des Trennabschnitts aufweiten.

Insgesamt kann der Fügevorgang der Halbschalen des Gurtschlosses durch die vorgeschlagenen Ausführungsformen der Rippen weiter vereinfacht werden. Aufgrund des sich zum Ende hin konisch verjüngenden Kernzapfens werden die Rippen zum freien Ende des Befestigungsabschnitts flexibler und in Richtung der Trennebene des Verbindungselements steifer. Damit kann einerseits der Einführvorgang des Verbindungselementes vereinfacht und die Befestigung zum Ende des Zusammenfügens versteift werden.

Gemäß einer bevorzugten Ausgestaltung der Erfindung ist vorgesehen, in der für den Befestigungsabschnitt des Verbindungselementes bestimmten Aufnahme der Halbschale eine Profilierung einzubringen, die komplementär zu den Rippen ausgeführt ist. Durch die komplementär zu den Rippen des Befestigungsabschnitts ausgeführte Profilierung stellt sich in einer Endlage bei Fertigstellung der Schlosskappe bzw. des Gurtschlosses im Bereich der Aufnahme eine formschlüssige verzahnte Verbindung zwischen dem Verbindungselement und der Halbschale ein.

Als weitere oder ergänzende Maßnahme, um den Befestigungsabschnitt in der Halbschale zu sichern, schließt die Erfindung ein Verbindungselement mit asymmetrisch ausgeführten Rippen ein. Dazu sind diese Rippen umfangsseitig vorzugsweise in zwei sich jeweils um 180° erstreckende Segmente oder Bereiche aufgeteilt, die zueinander versetzt einen Höhenversatz bilden. Alternativ dazu können erfindungsgemäß die Rippen in mehr als zwei Bereiche aufgeteilt werden. In einer weiteren ergänzenden Ausgestaltung sind den asymmetrisch ausgeführten Rippen des Befestigungsabschnitts entsprechend komplementäre Profilierungen in der Aufnahme der Halbschale zugeordnet. Vorteilhaft ermöglicht das konstruktive Konzept der asymmetrisch angeordneten Abschnitte in Verbindung mit den Profilierungen in der Aufnahme eine optimale, sich auf unterschiedliche Ebenen erstreckende Last- bzw. Zugkraftverteilung.

Eine bevorzugte geometrische Auslegung von dem Befestigungsabschnitt des Verbindungselements sieht vor, dass für den Kernzapfen ein Konuswinkel α von ≥ 2° vorgesehen ist. Damit verjüngt sich der Kernzapfen kontinuierlich bis zu dem freien Ende des Befestigungsabschnitts. Durch diese geometrische Auslegung von dem Konusverlauf verlängern sich diese mit zunehmendem Abstand von dem Trennabschnitt des Verbindungselements, verbunden mit einer erhöhten Elastizität der endseitigen rampenförmigen Abschnitte im Vergleich zu den steiferen Abschnitten im Bereich des Trennabschnitts. Diese Maßnahmen gewährleisten eine gewünschte, nahezu gleichbleibende Einpresskraft der Verbindungselemente bis zur Erreichung einer gegenseitigen Anlage beider Halbschalen der Schlosskappe. Zur gezielten Einflussnahme auf die zum Einpressen der Verbindungselemente erforderliche Kraft kann sowohl der Konuswinkel α als auch der Steigungswinkel β der Hüllfläche der Rippen verändert werden. Weiterhin ist vorgesehen, dass bei stoffschlüssig fixiertem Verankerungsabschnitt in der Halbschale der Trennabschnitt des Verbindungselementes flächig an der Halbschale anliegt. Dabei übertrifft der Durchmesser des Trennabschnitts sowohl den Durchmesser von dem Befestigungsabschnitt als auch von dem Verankerungsabschnitt.

Als stoffschlüssige Verbindung zur Lagefixierung von dem Verankerungsabschnitt in einer Halbschale ist erfindungsgemäß vorgesehen, das Verbindungselement als Einlegeteil für ein Spritzgusswerkzeug auszulegen, das während des Kunststoff-Spritzgießverfahrens von dem Material der zugehörigen Halbschale umspritzt und dabei stoffschlüssig mit der Halbschale verbunden wird. Als Maßnahme zur Erzielung einer verbesserten stoffschlüssigen Sicherung weist der Verankerungsabschnitt des Verbindungselementes zumindest eine einen Hinterschnitt bildende, insbesondere umlaufende Einschnürung auf, die bei dem Spritzvorgang ausgefüllt wird. Alternativ zu einer umlaufenden Einschnürung oder Ringnut kann der Verankerungsabschnitt des Verbindungselements mehrere Einschnürungen, partielle Ausnehmungen oder auch eine Durchgangsöffnung einschließen, die jeweils bei dem Spritzverfahren mit Kunststoff ausgefüllt werden.

Ferner kann zur Erzielung einer wirksamen stoffschlüssigen Verbindung und spielfreien Einbaulage des Verbindungselements die Oberfläche des Verankerungsabschnitts zur Schaffung einer gezielten Außenprofilierung gerändelt oder mit einer definierten Rauheit versehen werden.

Für das erfindungsgemäße Verbindungselement eignet sich als Werkstoff vorzugsweise Polyamid. Das Verbindungselement kann dabei sowohl z.B. aus PA 66 als Einlegeteil ausgebildet sein, als auch in einem 2K-Spritzverfahren hergestellt sein, wobei die Halbschalen aus PP und das Verbindungselement aus PA gebildet sind.

Gemäß Anspruch 10 ist für die Montage, ein Zusammenfügen von zwei Halbschalen eines Gurtschlosses, ein folgende Schritte einschließendes Verfahren vorgesehen. Zunächst werden die Halbschalen mittels eines Kunststoff-Spritzgießverfahrens hergestellt. Zur Lagefixierung wird jeweils der Verankerungsabschnitt der Verbindungselemente als Einlegeteil bei dem Spritzgießverfahren der ersten Halbschale von dem Kunststoff umschlossen. Danach schließt sich eine Ausrichtung der zweiten Halbschale gegenüber der ersten Halbschale in einer Endposition an, die beiden Halbschalen entspricht. Anschließend erfolgt ein Einführen von den Befestigungsabschnitten der Verbindungselemente in Bohrungen der zweiten Halbschale, wobei der Außendurchmesser der profilierten Befestigungsabschnitte im nicht montierten Zustand den Durchmesser der Bohrungen übertrifft. Abschließend werden mittels eines Presswerkzeugs die Halbschalen bis zu einer gegenseitigen Abstützung in einer Endlage kraftbeaufschlagt, wobei sich die rampenförmigen Abschnitte der Befestigungsabschnitte elastisch verformen und die Halbschalen kraftschlüssig gehalten sind.

Die Erfindung wird im Folgenden anhand bevorzugter Ausführungsformen unter Bezugnahme auf die beigefügten Figuren erläutert. Dabei zeigt:
- Fig. 1: eine Schlosskappe in einer Perspektive;
- Fig. 2: einen Ausschnitt der Schlosskappe aus Fig. 1 in einer Schnittdarstellung;
- Fig. 3: eine Teilansicht von dem erfindungsgemäßen Verbindungselement;
- Fig. 4: ein erfindungsgemäßes Verbindungselement in einer Einzelteilzeichnung;
- Fig. 5: in einer Perspektive eine Detailansicht des erfindungsgemäßen Verbindungselementes; und
- Fig. 6: das Verbindungselement gemäß Fig. 5 im eingebauten Zustand.

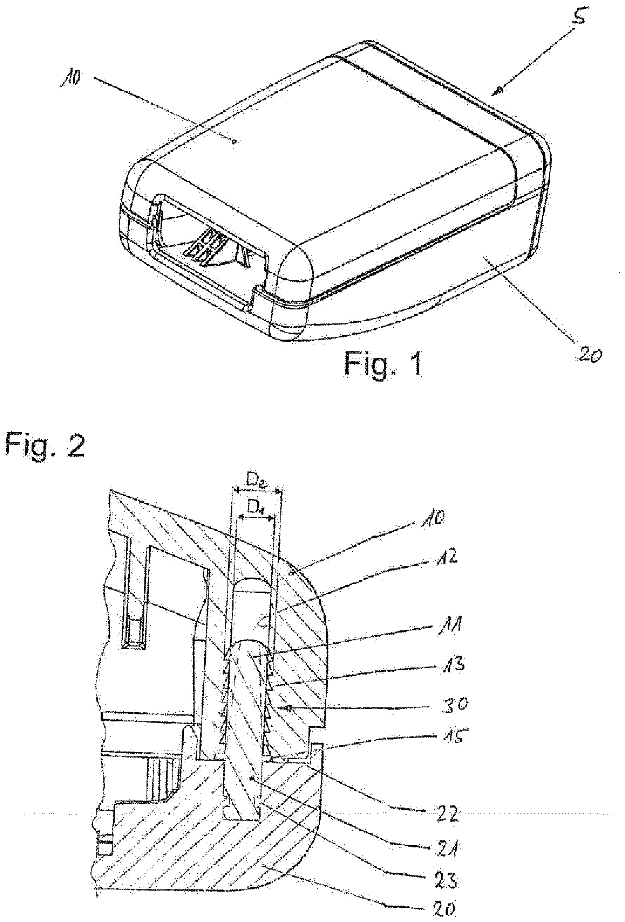

In der Fig. 1 ist eine Schlosskappe 5, eine äußere Ummantelung eines ansonsten nicht abgebildeten Gurtschlosses für ein Sicherheitsgurtsystem gezeigt. Die Schlosskappe 5 dient zur Aufnahme eines in der Technik bekannten Verriegelungsmechanismus, dem eine nicht dargestellte Entriegelungstaste zugeordnet ist. Die Schlosskappe 5 umfasst zwei Halbschalen 10,20, die über getrennte Verbindungselemente zusammengehalten sind.

Die Fig. 2 verdeutlicht die Einbaulage eines innerhalb der Schlosskappe 5 integrierten Verbindungselementes 30, das mit einem Befestigungsabschnitt 11 in eine Aufnahme 12 der Halbschale 10 sowie mit einem Verankerungsabschnitt 21 stoffschlüssig in der Halbschale 20 eingesetzt ist. Als Maßnahme zur Erreichung einer kraftschlüssigen Einbaulage ist der Befestigungsabschnitt 11 über eine Außenprofilierung in Form von begrenzt elastisch wirkenden, regelmäßig oder unregelmäßig umfangsverteilten, rampenförmigen Abschnitten 13 in der Aufnahme 12 der Halbschale 10 fixiert. Die rampenförmigen Abschnitte 13 bilden bei diesem Ausführungsbeispiel die erfindungsgemäß vorgesehenen Rippen an dem Befestigungsabschnitt 11. Ein maximaler Außendurchmesser D₂ des Befestigungsabschnitts 11 im Bereich der rampenförmigen Abschnitte 13 übertrifft den zugehörigen Durchmesser D₁ der Aufnahme 12. Der Verankerungsabschnitt 21 ist in einer von dem Kunststoff der Halbschale 20 umschlossenen Einbaulage gezeigt. Diese formschlüssige Verbindung kann mittels eines Kunststoff-Spritzgießverfahrens realisiert werden, bei dem der Verankerungsabschnitt 21 als Einlegeteil, z.B. aus PA 66, in ein Spritzgießwerkzeug eingesetzt und dabei von dem Kunststoff der Halbschale 20, z.B. PP, umschlossen wird. Statt der Verwendung eines Einlegeteils kann das Verbindungselement 30 mit dem Verankerungsabschnitt 21 auch in einem zweistufigen Spritzverfahren (2K-Spritzverfahren) hergestellt sein, bei dem die verschiedenen Kunststoffe nacheinander eingespritzt werden. Zur verbesserten Sicherung in dem Kunststoff weist der Verankerungsabschnitt 21 eine einen Hinterschnitt bildende Einschnürung 23 auf, die während des Spritzgießverfahrens ausgefüllt wird. Das Verbindungselement 30 bildet weiterhin zwischen dem Befestigungsabschnitt 11 und dem Verankerungsabschnitt 21 einen Trennabschnitt 15. Im Einbauzustand ist der Trennabschnitt 15, der im Vergleich zu den weiteren Abschnitten des Verbindungselementes 30 einen vergrößerten Durchmesser aufweist, an einer Fügekontur 22 der Halbschale 20 abgestützt. Weiterhin ist der Befestigungsabschnitt 11 endseitig gerundet ausgeführt, um bei der Montage das Einführen des Verbindungselements 30 in die Aufnahme 12 der Halbschale 10 zu vereinfachen.

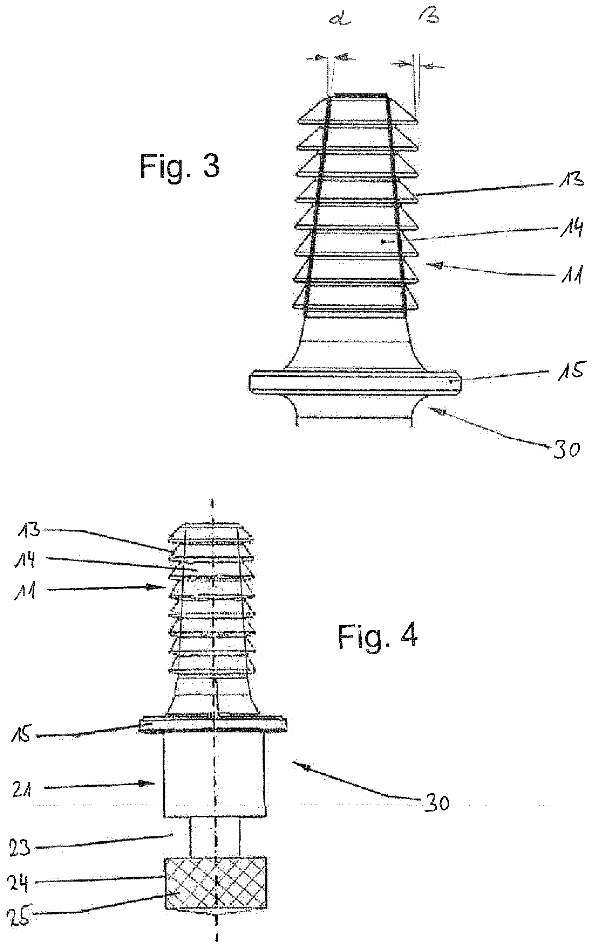

Die Fig. 3 bis Fig. 6 zeigen zur Verdeutlichung der Erfindung in vergrößerten Darstellungen ausschnittsweise Details des Verbindungselementes 30. Dabei stimmen die Bezugsziffern für gleiche oder funktionsgleiche Komponenten bzw. Bereiche mit denen der Fig. 2 überein. Die nachfolgenden Beschreibungen beschränken sich daher weitestgehend auf erfindungswesentliche unterschiedliche Ausgestaltungen.

In der Fig. 3 ist der Aufbau des Befestigungsabschnitts 11 von dem Verbindungselement 30 gezeigt. Der Befestigungsabschnitt 11 umfasst einen Kernzapfen 14, der sich von dem Trennabschnitt 15 bis zu dem freien Ende kontinuierlich konisch verjüngt. Außenseitig ist der Kernzapfen 14 von den symmetrisch angeordneten rampenförmigen Abschnitten 13 umschlossen. Die aneinandergereihten, außenseitig ein Sägezahnprofil bildenden elastischen Abschnitte 13 weiten sich jeweils in Richtung des Trennabschnitts 15 auf. Aufgrund des konischen Kernzapfens 14 verlängern sich die Abschnitte 13 mit zunehmendem Abstand zum Trennabschnitt 15. Konträr zu dem konisch sich verjüngenden Kernzapfen 14 weitet sich eine Außenkontur aller rampenförmigen Abschnitte 13 von dem Trennabschnitt 15 ausgehend auf. Mit diesen Maßnahmen erhöht sich die Elastizität der endseitigen rampenförmigen Abschnitte 13 im Vergleich zu den Abschnitten 13 nahe dem Trennabschnitt 15. Für den Kernzapfen 14 ist bevorzugt ein Konuswinkel α ≥ 2° oder auch 5° und für die Außenkontur der elastischen Abschnitte 13 ein Steigungswinkel β ≥ 2° vorgesehen, wobei der Steigungswinkel β auch 0 Grad betragen kann, da die vereinfachte Montage im Wesentlichen durch den Konuswinkel α des Kernzapfen 14 erzielt wird. Zur gezielten Einflussnahme auf die zum Einpressen der Verbindungselemente 30 erforderliche Kraft sowie die Haltekraft der Verbindungselemente 30 kann sowohl der Konuswinkel α als auch der Steigungswinkel β verändert werden.

Die Fig. 4 verdeutlicht insbesondere die Ausgestaltung des Verankerungsabschnitts 21 von dem Verbindungselement 30. Zur verbesserten Fixierung im Kunststoff bei dem Spritzverfahren zur Herstellung der Halbschale 20 ist in dem Verankerungsabschnitt 21 die einen Hinterschnitt bildende Einschnürung 23 eingebracht. Ergänzend oder zusätzlich dazu kann auf einer Oberfläche 24 des Verankerungsabschnitts 21 eine Rändelung 25 oder beliebige Profilierung aufgetragen werden.

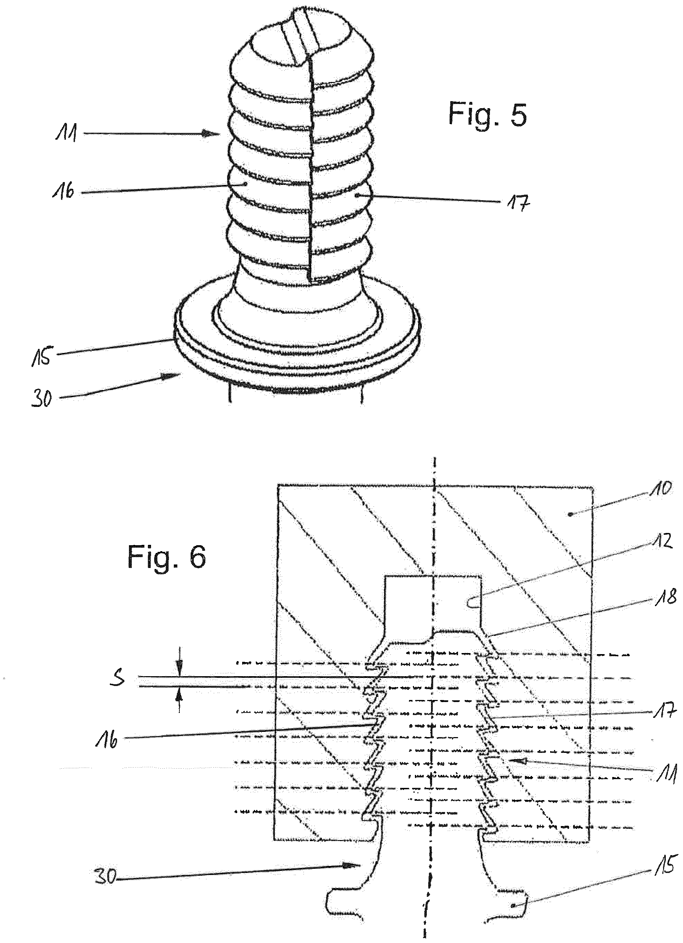

Die Fig. 5 und Fig. 6 zeigen das Verbindungselement 30, bei dem die elastischen Abschnitte 13 des Befestigungsabschnitts 11 jeweils zueinander versetzte Segmente 16, 17 bilden zur Schaffung einer asymmetrischen äußeren Struktur. Die Fig. 5 zeigt den Befestigungsabschnitt 11 in einer Perspektive und verdeutlicht die zwei Hälften bildenden versetzten Segmente 16,17 der elastischen Abschnitte 13. In der Fig. 6 wird durch die Einbaulage des Verbindungselements 30 in der Halbschale 10 ein Höhenversatz S deutlich, der sich durch die versetzten Segmente 16, 17 ergibt. Zur optimalen Kraftübertragung greifen die Segmente 16,17 formschlüssig in eine komplementär ausgeführte Profilierung 18 an der Innenwandung der Aufnahme 12 der Halbschale 10.

## Patentansprüche

1. Verbindungselement (30) zur Fixierung zweier Halbschalen (10, 20) von einer einem Gurtschloss eines Sicherheitsgurtsystems zugeordneten Schlosskappe (5), bestehend aus
- zwei außenprofilierten Endabschnitten,
- einem Verankerungsabschnitt (21), der in einer ersten Halbschale (20) fixiert ist sowie
- einem sich an einen Trennabschnitt (15) anschließenden Befestigungsabschnitt (11), der kraftschlüssig in eine Aufnahme (12) der weiteren Halbschale (10) eingepresst ist,
**dadurch gekennzeichnet, dass**
- das Verbindungselement 30) mit dem Verankerungsabschnitt (21) stoffschlüssig oder kraftschlüssig mit der ersten Halbschale (20) und der Befestigungsabschnitt (11) kraft- und/oder formschlüssig mit einer Überdeckung in der zweiten Halbschale (10) eingesetzt sind, **dadurch gekennzeichnet dass**
- der Befestigungsabschnitt (11) zu einem freien Ende einen konisch verjüngenden Kernzapfen (14) aufweist, der außenseitig eine symmetrisch oder asymmetrisch ausgeführte Struktur aus einzelnen Rippen aufweist.

2. Verbindungselement nach Anspruch 1, **dadurch gekennzeichnet, dass** die Rippen durch rampenförmigen Abschnitte (13) gebildet sind.

3. Verbindungselement nach Anspruch 1 oder 2, **dadurch gekennzeichnet, dass** die Außendurchmesser der Rippen übereinstimmen oder sich über die Länge des Befestigungsabschnitts (11) kontinuierlich verändern.

4. Verbindungselement nach einem der vorangegangenen Ansprüche, **dadurch gekennzeichnet, dass** sich die Rippen jeweils in Richtung des Trennabschnitts (15) aufweiten.

5. Verbindungselement nach einem der vorangegangenen Ansprüche, **dadurch gekennzeichnet, dass**
- in der für den Befestigungsabschnitt (11) des Verbindungselementes (30) bestimmten Aufnahme (12) der Halbschale (10) eine Profilierung (18) eingebracht ist, die komplementär zu den Rippen ausgeführt ist.

6. Verbindungselement nach einem der vorangegangenen Ansprüche, **dadurch gekennzeichnet, dass**
- die asymmetrisch ausgeführten Rippen des Verbindungselements (30) zueinander versetzte, einen Höhenversatz (S) bildende Segmente (16,17) aufweisen.

7. Verbindungselement nach einem der vorhergehenden Ansprüche, **dadurch gekennzeichnet, dass**
- der Kernzapfen (14) des Verbindungselementes (30) sich zum Ende des Befestigungsabschnitts (11) in einem Winkel α ≥ 2° verjüngt.

8. Verbindungselement nach einem der vorhergehenden Ansprüche, **dadurch gekennzeichnet, dass**
- der stoffschlüssig in der Halbschale (20) fixierte Verankerungsabschnitt (21) des Verbindungselementes (30) mit dem Trennabschnitt (15) flächig an der Halbschale (20) anliegt, wobei der Durchmesser des Trennabschnitts (15) die Durchmesser von dem Befestigungsabschnitt (11) und dem Verankerungsabschnitt (21) übertrifft.

9. Verbindungselement nach einem der vorhergehenden Ansprüche, **dadurch gekennzeichnet, dass**
- der Verankerungsabschnitt (21) des Verbindungselementes (30) als Einlegeteil ausgeführt oder von einem Kunststoff der Halbschale (20) umspritzt ist.

10. Verbindungselement nach Anspruch 9, **dadurch gekennzeichnet, dass**
- der Verankerungsabschnitt (21) des Verbindungselementes (30) zumindest eine einen Hinterschnitt bildende, umlaufende Einschnürung (23) oder partiell eingebrachte Ausnehmungen aufweist, die bei einem Kunststoff-Spritzgießverfahren von dem Kunststoff ausgefüllt oder umspritzt werden.

11. Verbindungselement nach einem der vorhergehenden Ansprüche, **dadurch gekennzeichnet, dass**
- eine Oberfläche (24) des Verankerungsabschnitts (21) von dem Verbindungselement (30) eine Rändelung (25) oder eine definierte Rauheit aufweist.

12. Verbindungselement nach einem der vorhergehenden Ansprüche, **dadurch gekennzeichnet, dass**
- das Verbindungselement (30) aus Polyamid hergestellt ist.

13. Verfahren zum Verbinden von zwei Halbschalen einer Schlosskappe eines Gurtschlosses mit einem Verbindungselement nach einem der Ansprüche 1 bis 12 mit folgenden Schritten:
- Herstellen einer ersten Halbschale (20) mittels eines Kunststoff-Spritzgießverfahrens, wobei zur Lagefixierung der Verbindungselemente (30) jeweils ein Verankerungsabschnitt (21) als Einlegeteil bei einem Spritzgießverfahren von dem Kunststoff umschlossen wird;
- Ausrichtung der zweiten Halbschale (10) gegenüber der ersten Halbschale (20), die einer Endposition beider Bauteile entspricht;
- Einführen von Befestigungsabschnitten (11) der Verbindungselemente (30) jeweils in Aufnahmen (12) der zweiten Halbschale (10), wobei ein Außendurchmesser (D₂) der Befestigungsabschnitte (11) im nicht montierten Zustand einen Durchmesser (D₁) der Aufnahmen (12) übertrifft;
- Kraftbeaufschlagung der Halbschalen (10, 20) mittels eines Presswerkzeugs, bei der die Befestigungsabschnitte (11) bis zu einer Endlage, einer gegenseitigen Abstützung der Halbschalen (10,20) in die Aufnahme (12) der Halbschale (10) eingepresst werden.

## Claims

1. Connecting element (30) for securing two half shells (10, 20) of a buckle cap (5) assigned to a belt buckle of a safety belt system, consisting of
- two externally profiled end portions,
- an anchoring portion (21), which is secured in a first half shell (20) and
- a fastening portion (11), which adjoins a separating portion (15) and is pressed in a force-fitting manner into a receptacle (12) of the other half shell (10),
**characterised by** that
- the connecting element (30) is inserted with the anchoring portion (21) in a material-locking or force-fitting manner into the first half shell (20) and the fastening portion (11) is inserted in a force- and/or form-fitting manner into the second half shell (10), wherein
- the fastening portion (11) has a conically tapering core pin (14) at one free end, which pin has a symmetrically or asymmetrically executed structure of individual ribs on the outside.

2. Connecting element according to claim 1, **characterised by** that the ribs are formed by ramp-like portions (13).

3. Connecting element according to claim 1 or 2, **characterised by** that the outer diameter of the ribs coincides or changes continuously over the length of the fastening portion (11).

4. Connecting element according to any one of the preceding claims, **characterised by** that the ribs each expand in the direction of the separating portion (15).

5. Connecting element according to any one of the preceding claims, **characterised by** that
- in the receptacle (12) of the half shell (10) intended for the fastening portion (11) of the connecting element (30), a profiling (18) is introduced, which is executed complementary to the ribs.

6. Connecting element according to any one of the preceding claims, **characterised by** that
- the asymmetrically executed ribs of the connecting element (30) have segments (16, 17) that are offset to one another and form a height offset (S).

7. Connecting element according to any one of the preceding claims, **characterised by** that
- the core pin (14) of the connecting element (30) tapers towards the end of the fastening portion (11) at an angle α ≥ 2°.

8. Connecting element according to any one of the preceding claims, **characterised by** that
- the anchoring portion (21) of the connecting element (30) secured in a material-locking manner in the half shell (20) rests with the separating portion (15) two-dimensionally on the half shell (20), wherein the diameter of the separating portion (15) exceeds the diameters of the fastening portion (11) and the anchoring portion (21).

9. Connecting element according to any one of the preceding claims, **characterised by** that
- the anchoring portion (21) of the connecting element (30) is executed as an insert component or encapsulated by a plastic of the half shell (20).

10. Connecting element according to claim 9, **characterised by** that
- the anchoring portion (21) of the connecting element (30) has at least one circumferential constriction (23) forming an undercut or partially introduced recesses, which are filled or encapsulated by the plastic in a plastic injection moulding process.

11. Connecting element according to any one of the preceding claims, **characterised by** that
- a surface (24) of the anchoring portion (21) of the connecting element (30) has a knurling (25) or a defined roughness.

12. Connecting element according to any one of the preceding claims, **characterised by** that
- the connecting element (30) is manufactured from polyamide.

13. Method for connecting two half shells of a buckle cap of a belt buckle with a connecting element according to any one of claims 1 to 12 with the following steps:
- manufacture of a first half shell (20) by means of a plastic injection moulding process, wherein for the positional securing of the connecting elements (30) an anchoring portion (21) is respectively encapsulated by the plastic as an insert part in an injection moulding process;
- alignment of the second half shell (10) opposite the first half shell (20), which corresponds to an end position of both components;
- introduction of fastening portions (11) of the connecting elements (30) respectively into receptacles (12) of the second half shell (10), wherein an outer diameter (D₂) of the fastening portions (11) exceeds a diameter (D₁) of the receptacles (12) in the non-assembled state;
- application of force to the half shells (10, 20) by means of a pressing tool, in which the fastening portions (11) are pressed into the receptacle (12) of the half shell (10) as far as an end position, a reciprocal support of the half shells (10, 20).

## Revendications

1. Élément de liaison (30) pour la fixation de deux demi-coques (10, 20) d'un boîtier de boucle (5) associé à une boucle de ceinture d'un système de ceinture de sécurité, constitué de
- deux parties d'extrémité à profil extérieur,
- une partie d'ancrage (21), qui est fixée dans une première demi-coque (20), ainsi que
- une partie de fixation (11) contiguë à une partie de séparation (15), et qui est enfoncée par friction dans un logement (12) de l'autre demi-coque (10),
**caractérisé en ce que**
- l'élément de liaison (30) est inséré avec la partie d'ancrage (21) avec la première demi-coque (20) par liaison de matière ou par friction et la partie de fixation (11) est insérée avec un recouvrement dans la seconde demi-coque (10) par friction et/ou par complémentarité de formes, mais
- la partie de fixation (11) comporte un tourillon central (14) s'amincissant de manière conique vers une extrémité libre, qui comporte sur son côté extérieur une structure constituée de nervures séparées, réalisée de manière symétrique ou asymétrique.

2. Élément de liaison selon la revendication 1, **caractérisé en ce que** les nervures sont formées par des parties en forme de rampe (13).

3. Élément de liaison selon la revendication 1 ou 2, **caractérisé en ce que** les diamètres extérieurs des nervures concordent les uns avec les autres ou changent en continu sur la longueur de la partie de fixation (11).

4. Élément de liaison selon l'une des revendications précédentes, **caractérisé en ce que** les nervures s'élargissent respectivement dans la direction de la partie de séparation (15).

5. Élément de liaison selon l'une des revendications précédentes, **caractérisé en ce que**
- un profilage (18), qui est réalisé de manière complémentaire aux nervures, est pratiqué dans le logement (12) de la demi-coque (10) prévu pour la partie de fixation (11) de l'élément de liaison (30).

6. Élément de liaison selon l'une des revendications précédentes, **caractérisé en ce que**
- les nervures de l'élément de liaison (30) réalisées de manière asymétrique comportent des segments (16, 17) décalés les uns par rapport aux autres et formant un décalage en hauteur (S).

7. Élément de liaison selon l'une des revendications précédentes, **caractérisé en ce que**
- le tourillon central (14) de l'élément de liaison (30) s'amincit vers l'extrémité de la partie de fixation (11) selon un angle α ≥ 2°.

8. Élément de liaison selon l'une des revendications précédentes, **caractérisé en ce que**
- la partie d'ancrage (21) de l'élément de liaison (30) fixée dans la demi-coque (20) par liaison de matière s'appuie de manière plane avec la partie de séparation (15) contre la demi-coque (20), le diamètre de la partie de séparation (15) étant supérieur aux diamètres de la partie de fixation (11) et de la partie d'ancrage (21).

9. Élément de liaison selon l'une des revendications précédentes, **caractérisé en ce que**
- la partie d'ancrage (21) de l'élément de liaison (30) est réalisée sous la forme d'un insert ou est surmoulée d'une matière plastique de la demi-coque (20).

10. Élément de liaison selon la revendication 9, **caractérisé en ce que**
- la partie d'ancrage (21) de l'élément de liaison (30) comporte au moins un rétrécissement (23) périphérique formant une contre-dépouille ou des évidements pratiqués de manière partielle, qui sont remplis ou surmoulés avec la matière plastique lors d'un procédé de moulage par injection de matière plastique.

11. Élément de liaison selon l'une des revendications précédentes, **caractérisé en ce que**
- une surface (24) de la partie d'ancrage (21) de l'élément de liaison (30) comporte un moletage (25) ou une rugosité définie.

12. Élément de liaison selon l'une des revendications précédentes, **caractérisé en ce que**
- l'élément de liaison (30) est fabriqué en polyamide.

13. Procédé de liaison de deux demi-coques d'un boîtier de boucle d'une boucle de ceinture au moyen d'un élément de liaison selon l'une des revendications 1 à 12, comprenant les étapes suivantes :
- fabrication d'une première demi-coque (20) au moyen d'un procédé de moulage par injection de matière plastique, une partie d'ancrage (21) sous la forme d'un insert étant respectivement entourée par la matière plastique lors d'un procédé de moulage par injection pour la fixation de la position des éléments de liaison (30) ;
- orientation de la seconde demi-coque (10) face à la première demi-coque (20), qui correspond à une position finale des deux constituants ;
- introduction de parties de fixation (11) des éléments de liaison (30) respectivement dans des logements (12) de la seconde demi-coque (10), un diamètre extérieur (D₂) des parties de fixation (11) dans l'état non monté étant supérieur à un diamètre (D₁) des logements (12) ;
- soumission des demi-coques (10, 20) à une force au moyen d'un outil de compression, lors de laquelle les parties de fixation (11) sont enfoncées dans le logement (12) de la demi-coque (10) jusqu'à une position finale, un appui réciproque des demi-coques (10, 20).
